# EUROPÄISCHE PATENTSCHRIFT

(11) **EP 3 040 155 B1**
(45) Veröffentlichungstag und Bekanntmachung des Hinweises auf die Patenterteilung: **29.09.2021**
(21) Anmeldenummer: 15203066.4
(22) Anmeldetag: 30.12.2015
(51) Int. Cl.: B23Q 1/01, B23Q 1/28, F16C 29/02, F16C 29/10, F16C 29/12

(54) **WERKZEUGMASCHINE MIT MASCHINENBETT UND GLEITFÜHRUNG**
MACHINE TOOL WITH MACHINE BED AND SLIDING GUIDE
MACHINE-OUTIL AVEC BATI ET GUIDAGE COULISSANT

(30) Priorität: 30.12.2014 EP 14200646
(43) Veröffentlichungstag der Anmeldung: 06.07.2016
(73) Patentinhaber: WFL Millturn Technologies GmbH & Co. KG, 4030 Linz (AT)
(72) Erfinder: MARINGER, Herbert, 4642 Sattledt (AT)
(74) Vertreter: Jell, Friedrich

(56) Entgegenhaltungen:
- EP-A2- 0 904 891
- DD-A1- 157 081
- DE-A1- 19 533 077
- DE-U- 6 600 210
- FR-A- 1 447 875
- None

## Beschreibung

Die Erfindung betrifft eine Werkzeugmaschine und eine Gleitführung mit einer Flachführung, die mindestens eine Tragführung mit einer ersten Führungsfläche und die wenigstens eine Seitenführung mit einer zweiten Führungsfläche aufweist, mit einer die Tragführung sichernden Umgriffführung, die eine Umgriffleiste mit einer dritten Führungsfläche aufweist, wobei die dritte Führungsfläche der Umgriffführung zur zweiten Führungsfläche der Seitenführung geneigt angeordnet ist, und mit einer Klemmeinrichtung, die mit der Umgriffleiste zum Verklemmen der Umgriffführung mithilfe der dritten Führungsfläche zusammenwirkt, die Gleitführung festzustellen.

Um Gleitführungen feststellen zu können, sind verschiedenste Mechanismen aus dem Stand der Technik bekannt. Beispielsweise zeigt die SU1397236A1, bei einer Flachführung die Umgriffleiste einer Umgriffführung zu verkippen, um damit die gepaarten Führungselemente kraftschlüssig zu fixieren. Hohe Verschiebekräfte kann eine derart lösbare feste Verbindung nicht sicher abfangen.

Dies kann von einer anderen feststellbaren Flachführung (EP0904891B1) verbessert werden, bei der ein einstückiges Führungsteil, das zueinander rechteckig angeordnete Tragführungen, Seitenführungen und Umgriffführungen aufweist, elastisch verformt wird, um Seiten- und Umgriffführung gemeinsam kraftschlüssig zu fixieren. Nachteilig erfordert dies jedoch einen vergleichsweise hohen konstruktiven Aufwand am Führungsteil der Flachführung. Aus der FR1447875 ist ein Maschinenbett mit einer Gleitführung bekannt, wobei die Gleitführung eine Tragführung, eine Seitenführung und eine geneigte Umgriffführung umfasst.

Außerdem ist aus der DD157081B1 eine Schwalbenschwanzführung einer Werkzeugmaschine bekannt, bei der ein Führungselement einer Seitenführung elastisch verformt wird, um die Schwalbenschwanzführung zu verklemmen und damit die Schrägführung festzustellen. Nachteilig bedarf es für eine Schwalbenschwanzführung einer Zusatzabdeckung gegenüber Spanreste oder anderer Reinigungsmaßnahmen, um Spanansammlungen im Bereich der oberen Seitenführung der Schwalbenschwanzführung zu vermeiden. Dies erhöht nicht nur den konstruktiven Aufwand, sondern schränkt auch den Arbeitsraum einer Werkzeugmaschine ein.

Es ist daher die Aufgabe der Erfindung, ausgehend vom Eingangs geschilderten Stand der Technik eine Gleitführung nicht nur sicher feststellen zu können, sondern auch konstruktiv einfach auszugestalten. Außerdem soll die festgestellte Gleitführung eine hohe mechanische Steifigkeit aufweisen können.

Die Erfindung löst die gestellte Aufgabe durch eine Werkzeugmaschine nach Anspruch 1. Ist die dritte Führungsfläche der Umgriffleiste zur ersten Führungsfläche der Tragführung geneigt angeordnet, kann - konstruktiv einfach gelöst - ein standfestes Feststellen der Gleitführung sichergestellt werden. Mit dieser zu den Führungsflächen der Tragführung und der Seitenführung geneigten dritten Führungsfläche können nämlich erfindungsgemäß sowohl die Tragführung als auch die Seitenführung mitverklemmt werden. Zudem können eventuelle Führungsspiele sicher ausgeglichen werden, wenn die dritte Führungsfläche der Umgriffführung zur ersten und zweiten Führungsfläche derart geneigt angeordnet ist, dass in Folge der auf die dritte Führungsfläche wirkenden Klemmeinrichtung die Trag- und Seitenführung mit der Umgriffführung mitverklemmt werden. Damit kann erfindungsgemäß eine einfache und dennoch standfest verklemmbare Gleitführung mit hoher mechanischer Steifigkeit im festegestellten Zustand geschaffen werden.

Das Feststellen der Gleitführung kann gegenüber unbeabsichtigtem Lösen sicherer ausgestaltet werden, wenn die Klemmeinrichtung auf die dritte Führungsfläche zumindest über ein elastisches Verformen der Umgriffleiste wirkt. Entsprechend des eingestellten Ausmaßes der elastischen Verformung kann nämlich die Umgriffleiste kraft- und schwingungskompensierend wirken und damit die Standfestigkeit der Führung erhöhen.

Ist die Umgriffleiste schwimmend gelagert, kann durch ein Spiel der fest gelagerten Umgriffleiste unter anderem ein Lösen der festgestellen Gleitführung weiter erleichtert werden. Außerdem kann damit die Gleitführung hinsichtlich diverser Führungsspiele toleranter ausgestaltet werden, was die konstruktive Einfachheit der erfindungsgemäßen Gleitführung weiter verbessern kann.

Eine kompakte Gleitführung mit vergleichsweise geringer Bauhöhe kann erreicht werden, wenn die Umgriffleiste in einem beweglichen Führungselement der Seitenführung gelagert ist.

Die Konstruktionsverhältnisse können weiter vereinfacht werden, wenn die elastische Verformung über das Hebelgesetz eingestellt wird, indem die dritte Führungsfläche auf einem Trägerarm der Umgriffleiste vorgesehen ist, auf deren anderen Trägerarm die Klemmeinrichtung wirkt. Ist dabei die Umgriffleiste zwischen den beiden Trägerarmen gelagert, kann die elastische Verformung des einen Trägerarms in eine Gegenbiegung des anderen Trägerarms konstruktiv einfach eingeleitet und damit eine Klemmung der Umgriffführung sichergestellt werden.

Vorteilhafte Klemmverhältnisse können sich ergeben, wenn die dritte Führungsfläche sowohl zur ersten Führungsfläche als auch zur zweiten Führungsfläche je einen spitzen Winkel einschließend geneigt verläuft - dieser kann vorzugsweise 45 Grad betragen. Damit können Tragführung und Seitenführung standfest mitverklemmt werden, was das spielfreie Festsetzen der Gleitführung verbessern kann.

Die Gleitführung kann konstruktiv kompakt ausgeführt sein, wenn die Seitenführung zwischen der Tragführung und der Umgriffführung angeordnet ist. Zudem kann sich durch die konstruktiv vergleichsweise nah beieinander vorgesehenen Führungspaare die Gefahr eines nachteiligen Verkeilens der Gleitführung reduzieren, was wiederum das Lösen der festgestellten Gleitführung erleichtern kann.

Die Konstruktionsverhältnisse können weiter vereinfacht werden, wenn die Umgriffführung eine flache Führungsfläche aufweist. Eine kostengünstige Gleitführung kann damit geschaffen werden.

Vorteilhaft kann die Linearführung eine zweite Gleitführung als Gegenführung aufweisen, um die Abstützung des Schlittens und/oder Reitstocks zu verbessern. Vorzugsweise kann diese zweite Gleitführung auch als geschlossene Flachführung ausgeführt sein, um die konstruktive Einfachheit der Werkzeugmaschine zu erhöhen.

Um eine vergleichsweise hohe Feststellkraft über die Umgriffführung auf die Trag- und Seitenführung ausüben zu können, kann vorgesehen sein, die erste Gleitführung unterhalb der zweiten Gleitführung anzuordnen. Damit kann unter anderem eine besonders hohe Haftreibungsgrenze zur Feststellung der Linearführung ermöglicht werden.

Schließt die erste Führungsfläche der Tragführung der ersten Gleitführung an die Schrägfläche des Schrägbetts an, ist es möglich, dass die Linearführung den freien Spanfall an der Schrägfläche nicht behindert und Spanansammlungen vermeidet. Diese konstruktive Ausgestaltung erweist sich auch hinsichtlich einer Selbstreinigung des Schrägbetts als besonders günstig - vorzugsweise wenn die erste Führungsfläche an die Schrägfläche horizontal verlaufend anschließt. Ein beim Bearbeitungsprozess verwendetes Kühlschmiermittel kann nämlich für ein sicheres Entfernen bzw. Fortschwemmen von eventuell im Bereich der ersten Gleitführung liegengebliebenen Spänen sorgen. Standfestigkeit und Wartungsfreundlichkeit der Vorrichtung können sich auf diese Weise weiter erhöhen.

In den Figuren ist beispielsweise der Erfindungsgegenstand anhand einer Ausführungsvariante näher dargestellt. Es zeigen
Fig. 1 eine teilweise aufgerissene Seitenansicht auf eine Werkzeugmaschine und
Fig. 2 eine Detailansicht zur Fig. 1.

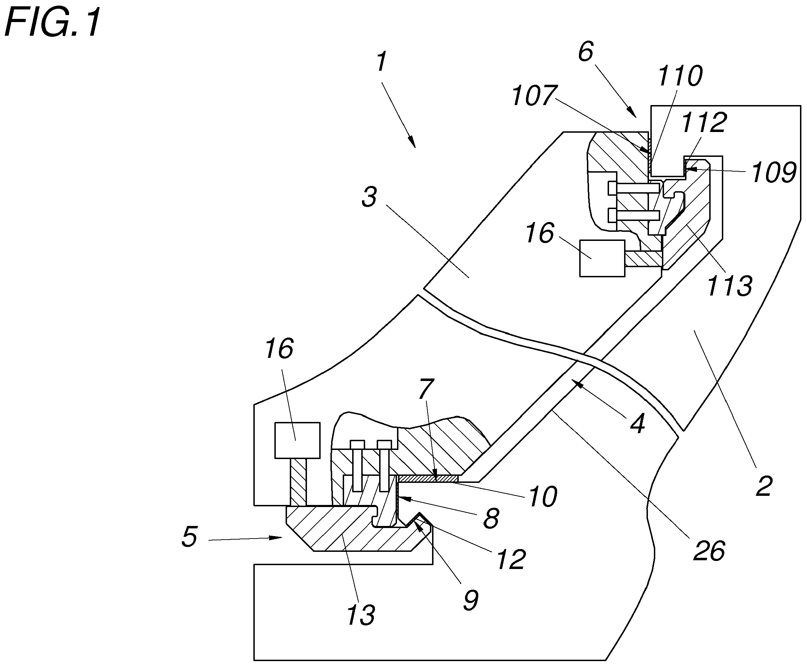

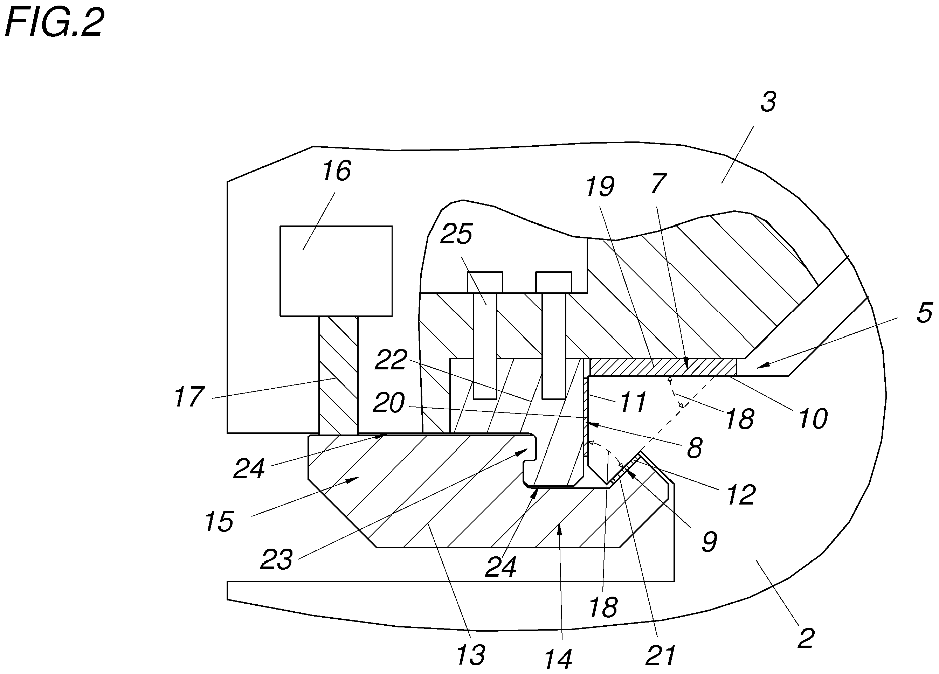

In der nach Fig. 1 beispielsweise dargestellten Werkzeugmaschine 1 wird ein auf einem schrägen Maschinenbett 2 bzw. Schrägbett linear verschiebbarer Schlitten 3 dargestellt, der auch einen Reitstock der Werkzeugmaschine 1 tragen kann. Für die bewegliche Lagerung des Schlittens 3 dient eine geschlossene Linearführung 4, die von zwei Gleitführungen 5, 6 ausbildet wird. Davon weist die untere erste Gleitführung 5 sowohl eine erste Flachführung mit einer Tragführung 7 und mit einer Seitenführung 8 als auch eine Umgriffführung 9 auf, denen je Führungsflächen 10, 11, 12 des Schlittens 3 zugehören - wie dies nach Fig. 2 besser zu erkennen ist. Der Umgriffführung 9, die die Tragführung 7 gegenüber einem Trennen sichert, ist eine Umgriffleiste 13 zugeordnet, die an einem Trägerarm 14 die Gleitleiste 21 trägt und auf deren anderen Trägerarm 15 eine Klemmeinrichtung 16 wirkt. Diese Klemmeinrichtung 16 dient zum Feststellen der Gleitführung 5, indem diese mit der Umgriffleiste 13 unter anderem zu deren elastischen Verformung zusammenwirkt. Wird nämlich der Bolzen 17 der Klemmeinrichtung 16 in Richtung der Umgriffleiste 13 verschoben, führt dies zu einer elastischen Biegung des damit direkt belasteten Trägerarms 15, was zu einer Gegenbewegung des anderen Trägerarms 14 führt und damit die Gleitführung 5 verklemmend festsetzt.

Erfindungsgemäß wird das Verklemmen der Umgriffführung 9 optimiert, indem die dritte Führungsfläche 12 der Umgriffleiste 13 zur ersten Führungsfläche 10 der Tragführung 7 geneigt angeordnet ist, und zwar in einem spitzen, nämlich 45 Grad, Winkel 18, der als Schnittwinkel der beiden Ebenen, in denen die Führungsflächen 10, 12 liegen, zu sehen ist. Diese konstruktive Ausführung ist auch in der Neigung der Führungsflächen 11, 12 zu erkennen, welche Führungsflächen 11, 12 einen spitzen Winkel 18 einschließenden, geneigt zueinander verlaufen.

Diese erfindungsgemäße Neigung der dritten Führungsfläche 12 kann eine Klemmkraft aber nicht nur auf die Tragführung 7 sondern auch auf die Seitenführung 8 bewirken, indem die dritte Führungsfläche 12 der Umgriffleiste 13 auch zur zweiten Führungsfläche 11 der Seitenführung 8 entsprechend geneigt angeordnet ist. Ein unerwünschtes Lösen der festgestellen Gleitführung 5 wird damit maßgeblich erschwert - womit folglich erfindungsgemäß ein besonders standfestes Feststellen erreicht werden kann. Zudem wird mit diesem Verklemmen der Umgriffführung 9 auch sicher ein eventuelles Spiel der Tragführung 7 und der Seitenführung 8 ausgeglichen, was die Positionierung des Schlittens 3 verbessert. Somit stellt dies bei Trag-, Seiten- und Umgriffführung 7,8, 9 mit deren Gleitleisten 19, 20, 21 zudem stets eine spielfreie Verbindung des festgestellten Schlittens 3 mit dem Maschinenbett 2 sicher und garantiert so in diesem Konstruktionsbereich eine hohe Steifigkeit und Genauigkeit der Werkzeugmaschine 1.

Wie insbesondere auch in Fig. 2 zu erkennen, ist die Seitenführung 8 zwischen der Tragführung 7 und der Umgriffführung 9 angeordnet, wobei die flache zweite Führungsfläche 11 der Seitenführung 8 rechtwinkelig zur flachen ersten Führungsfläche 10 der Tragführung 7 angeordnet ist und sich damit eine erste Flachführung ausbildet. Eine konstruktiv kompakte Gleitführung 5 mit Umgriff ist dadurch geschaffen. Zudem kann im Zusammenhang mit der 45 Grad-Neigung der flachen dritten Führungsfläche 12 zu den beiden anderen Führungsflächen 10 und 11 eine besonders gleichmäßige Aufteilung der Klemmkraft der Umgriffführung 9 auf die Führungsflächen 10, 11 der Trag- und Seitenführung 7, 8 sichergestellt werden.

Konstruktiv besonders einfach gelöst, ist die Umgriffleiste 13 im Führungselement 22 der Seitenführung 8 gelagert, welches bewegliche Führungselement 22 der ersten Gleitführung 5 dem Schlitten 3 zugehört. Hierzu ist zwischen diesen beiden Teilen 13 und 22 eine Nut-Federverbindung 23 vorgesehen, wie diese in der Fig. 2 insbesondere zu erkennen ist. Das Führungselement 22 der Seitenführung 8 ist mit dem Schlitten 3 lösbar mithilfe von Schrauben 25 befestigt, um dieses etwa für Wartungszwecke entfernen und montieren zu können. Der Vollständigkeit halber wird im Allgemeinen erwähnt, dass dem schrägen Maschinenbett 2 die feststehenden Führungselemente der Linearführung 4 zugeordnet sind.

In der Fig. 2 ist weiter zu erkennen, dass die Umgriffleiste 13 im Führungselement 22 der Seitenführung 8 mit vertikalem Spiel 24 bzw. dadurch schwimmend gelagert ist. Dieses Spiel 24 ermöglicht es, einerseits Fertigungstoleranzen einfacher auszugleichen als auch eine festgestellte Gleitführung 5 leichter zu lösen. Wird nämlich die elastische Verformung der Umgriffleiste 13 aufgegeben, kann durch das Eigengewicht der Umgriffleiste 13 diese zu einer spielbegrenzten Bewegung gezwungen und damit die Gleitführung sicher geöffnet werden. Hierzu wird im Allgemeinen erwähnt, dass die Lagerung der Umgriffleiste 13 ein derartig großes Spiel 24 aufweisen muss, dass sich die unbelastete Umgriffleiste 13 mithilfe ihres Eigengewichts in eine für diese Gleitführung 5 klemmfreie Führungslage bewegt.

Ähnlich zur unteren Gleitführung 5 wird auch die, als zweite geschlossene Flachführung ausgeführte, oberhalb angeordnete (obere) Gleitführung 6 verklemmt, wobei diese Gleitführung 6 die Gegenführung der ersten Gleitführung 5 bildet. Zum Unterschied zur unteren Gleitführung 5 ist die Führungsfläche 112 der Umgriffführung 109 jedoch parallel verlaufend zur Führungsfläche 110 der Tragführung 107, die auch als Seitenführung dient.

Da die erste Führungsfläche 10 der Tragführung 7 der ersten Gleitführung 5 an die Schrägfläche 26 des Schrägbetts horizontal verlaufend anschließt, wird der freie Spanfall aufgrund der Bearbeitung eines nicht näher dargestellten Werkstücks nicht beeinträchtigt. Zudem kann ein über das Schrägbett bzw. die Schrägfläche 26 fließendes, nicht näher dargestelltes Kühlschmiermittel eventuell liegengebliebene, nicht näher dargestellten Späne über die erste Führungsfläche 10 der Tragführung 7 fortschwemmen, was das Schrägbett vor unerwünschten Spanansammlungen schützt.

## Patentansprüche

1. Werkzeugmaschine mit einem als Schrägbett ausgeführten Maschinenbett (2), mit einem Schlitten (3) und/oder Reitstock und mit einer zwischen Maschinenbett (2) und Schlitten (3) und/oder Reitstock vorgesehenen, insbesondere geschlossenen, Linearführung (4), die eine erste Gleitführung (5)
mit einer Flachführung, die mindestens eine Tragführung (7) mit einer ersten Führungsfläche (10) und die wenigstens eine Seitenführung (8) mit einer zweiten Führungsfläche (11) aufweist,
mit einer die Tragführung (7) sichernden Umgriffführung (9), die eine Umgriffleiste (13) mit einer dritten Führungsfläche (12) aufweist, wobei die dritte Führungsfläche (12) der Umgriffführung (9) zur zweiten Führungsfläche (11) der Seitenführung (8) geneigt angeordnet ist,
und mit einer Klemmeinrichtung (16)
aufweist, wobei die Klemmeinrichtung (16) mit der Umgriffleiste (13) zum Verklemmen der Umgriffführung (9) mithilfe der dritten Führungsfläche (12) zusammenwirkt, die Gleitführung (5) festzustellen, wobei die dritte Führungsfläche (12) der Umgriffleiste (13) zur ersten Führungsfläche (10) der Tragführung (7) geneigt angeordnet ist, wobei die erste Führungsfläche (10) der Tragführung (7) der ersten Gleitführung (5) an die Schrägfläche (26) des Schrägbetts horizontal verlaufend anschließt.

2. Werkzeugmaschine nach Anspruch 1, **dadurch gekennzeichnet, dass** die Klemmeinrichtung (16) auf die dritte Führungsfläche (12) zumindest über ein elastisches Verformen der Umgriffleiste (13) wirkt.

3. Werkzeugmaschine nach Anspruch 1 oder 2, **dadurch gekennzeichnet, dass** die Umgriffleiste (13) schwimmend gelagert ist.

4. Werkzeugmaschine nach Anspruch 1, 2 oder 3, **dadurch gekennzeichnet, dass** die Umgriffleiste (13) in einem beweglichen Führungselement (22) der Seitenführung (8) gelagert ist.

5. Werkzeugmaschine nach einem der Ansprüche 1 bis 4, **dadurch gekennzeichnet, dass** die dritte Führungsfläche (12) auf einem Trägerarm (14) der Umgriffleiste (13) vorgesehen ist, auf deren anderen Trägerarm (15) die Klemmeinrichtung (16) wirkt, wobei die Umgriffleiste (13) zwischen den beiden Trägerarmen (14, 15) gelagert ist.

6. Werkzeugmaschine nach einem der Ansprüche 1 bis 5, **dadurch gekennzeichnet, dass** die dritte Führungsfläche (12) sowohl zur ersten Führungsfläche (10) als auch zur zweiten Führungsfläche (11) je einen spitzen Winkel (18), insbesondere 45 Grad, einschließend geneigt verläuft.

7. Werkzeugmaschine nach einem der Ansprüche 1 bis 6, **dadurch gekennzeichnet, dass** die Seitenführung (8) zwischen der Tragführung (7) und der Umgriffführung (9) angeordnet ist.

8. Werkzeugmaschine nach einem der Ansprüche 1 bis 7, **dadurch gekennzeichnet, dass** die Umgriffführung (9) eine flache Führungsfläche (12) aufweist.

9. Werkzeugmaschine nach einem der Ansprüche 1 bis 8, **dadurch gekennzeichnet, dass** die Linearführung (4) eine zweite, insbesondere als geschlossene Flachführung ausgeführte, Gleitführung (6) als Gegenführung aufweist.

10. Werkzeugmaschine nach Anspruch 9, **dadurch gekennzeichnet, dass** die erste Gleitführung (5) unterhalb der zweiten Gleitführung (6) angeordnet ist.

## Claims

1. Machine tool with a machine bed (2) designed as an inclined bed, with a slide (3) and / or tailstock and with an more particularly closed linear guide (4) provided between the machine bed (2) and slide (3) and / or tailstock, which has a first sliding guide (5) with a flat guide, which has at least one support guide (7) with a first guide surface (10) and which has at least one lateral guide (8) with a second guide surface (11), having a wrap-around guide (9) securing the support guide (7), which has a wrap-around strip (13) with a third guide surface (12), wherein the third guide surface (12) of the wrap-around guide (9) is arranged inclined to the second guide surface (11) of the lateral guide (8), and having a clamping device (16), wherein the clamping device (16) interacts with the wrap-around strip (13) for clamping the wrap-around guide (9) with the aid of the third guide surface (12) to fix the sliding guide (5), wherein the third guide surface (12) of the wrap-around strip (13) is arranged inclined to the first guide surface (10) of the support guide (7), wherein the first guide surface (10) of the support guide (7) of the first sliding guide (5) adjoins the inclined surface (26) of the inclined bed running horizontally.

2. Machine tool according to claim 1, **characterized in that** the clamping device (16) acts on the third guide surface (12) at least via an elastic deformation of the wrap-around strip (13).

3. Machine tool according to claim 1 or 2, **characterized in that** the wrap-around strip (13) is mounted in a floating manner.

4. Machine tool according to claim 1, 2 or 3, **characterized in that** the wrap-around strip (13) is mounted in a movable guide element (22) of the lateral guide (8).

5. Machine tool according to one of claims 1 to 4, **characterized in that** the third guide surface (12) is provided on one support arm (14) of the wrap-around strip (13), on the other support arm (15) of which the clamping device (16) acts, wherein the wrap-around strip (13) is mounted between the two support arms (14, 15).

6. Machine tool according to one of claims 1 to 5, **characterized in that** the third guide surface (12) extends in an inclined manner at an acute angle (18) each, more particulaly 45 degrees, to both the first guide surface (10) and the second guide surface (11).

7. Machine tool according to one of claims 1 to 6, **characterized in that** the lateral guide (8) is arranged between the support guide (7) and the wrap-around guide (9).

8. Machine tool according to one of claims 1 to 7, **characterized in that** the wrap-around guide (9) has a flat guide surface (12).

9. Machine tool according to one of claims 1 to 8, **characterized in that** the linear guide (4) has a second sliding guide (6) as a counter guide, more particularly designed as a closed flat guide.

10. Machine tool according to claim 9, **characterized in that** the first sliding guide (5) is arranged below the second sliding guide (6).

## Revendications

1. Machine-outil avec un socle de machine (2) conçu comme un socle incliné, avec un chariot (3) et/ou une poupée mobile et avec un guide linéaire (4) plus particulièrement fermé prévu entre le socle de machine (2) et le chariot (3) et / ou poupée mobile, qui présente un premier guide coulissant (5) avec un guide plat, qui comporte au moins un guide portant (7) muni d'une première surface de guidage (10) et au moins un guide latéral (8) muni d'une deuxième surface de guidage (11), avec un guide enveloppant (9) qui assure le guide portant (7) et possède un bandeau enveloppant (13) avec une troisième surface de guidage (12), la troisième surface de guidage (12) du guide enveloppant (9) étant inclinée vers la deuxième surface de guidage (11) du guide latéral (8), et avec une installation de serrage (16), installation de serrage (16) coopère avec le bandeau enveloppant (13) pour serrer le guide enveloppant (9) à l'aide de la troisième surface de guidage (12) afin d'immobiliser le guide de glissement (5), la troisième surface de guidage (12) du bandeau enveloppant (13) étant inclinée par rapport à la première surface de guidage (10) du guide portant (7), dans laquelle la première surface de guidage (10) du guide portant (7) du premier guide coulissant (5) jouxte la surface inclinée (26) du lit incliné s'étendant horizontalement.

2. Machine-outil selon la revendication 1, **caractérisé en ce que** l'installation de serrage (16) agit sur la troisième surface de guidage (12) au moins par une déformation élastique du bandeau enveloppant (13).

3. Machine-outil selon la revendication 1 ou 2, **caractérisé en ce que** le bandeau enveloppant (13) est supporté de façon flottante.

4. Machine-outil selon la revendication 1, 2 ou 3, **caractérisé en ce que** le bandeau enveloppant (13) est supporté dans un élément de guidage mobile (22) du guide latéral (8).

5. Machine-outil selon l'une des revendications 1 à 4, **caractérisé en ce que** la troisième surface de guidage (12) est prévue sur un bras de support (14) du bandeau enveloppant (13) dont l'autre bras de support (15) est soumis à l'action de l'installation de serrage (16), le bandeau enveloppant (13) étant supporté entre les deux bras de support (14, 15).

6. Machine-outil selon l'une des revendications 1 à 5, **caractérisé en ce que** la troisième surface de guidage (12) est inclinée aussi bien vers la première surface de guidage (10) que vers la deuxième surface de guidage (11) en formant un angle aigu (18), en particulier de 45 degrés.

7. Machine-outil selon selon l'une des revendications 1 à 6, **caractérisé en ce que** le guide latéral (8) est disposé entre le guide portant (7) et le guide enveloppant (9).

8. Socle de machine (2) selon l'une des revendications 1 à 7, **caractérisé en ce que** le guide enveloppant (9) présente une surface de guidage (12) plane.

9. Machine-outil selon l'une des revendications 1 à 8, **caractérisée en ce que** le guide linéaire (4) présente un deuxième guide de glissement (6), en particulier réalisé comme un guide plat fermé, formant un contre-guide.

10. Machine-outil selon la revendication 9 **caractérisé en ce que** le premier guide de glissement (5) est disposé en dessous du deuxième guide de glissement (6).
